# EUROPEAN PATENT APPLICATION

(11) **EP 4 708 450 A1**
(43) Date of publication of application: **11.03.2026**
(21) Application number: 25196926.7
(22) Date of filing: 20.08.2025
(51) Int. Cl.: H01M 10/48, H01M 50/213, H01M 50/262

(54) **BATTERY PACK**

(30) Priority: 20.08.2024 KR 20240111617
(71) Applicant: SAMSUNG SDI CO., LTD., Yongin-si, Gyeonggi-do 17084 (KR)
(72) Inventor: JEONG, Daein, 17084 Yongin-si, Gyeonggi-do (KR)
(74) Representative: Gulde & Partner

(57) **Abstract**

A battery pack includes battery cells; a thermistor configured to measure temperature information of at least one of the battery cells; a cell holder configured to control an assembling position of the battery cells and including an assembling piece configured to cause an assembling position of the thermistor toward position not to deviate from the battery cells and an assembling posture of the thermistor oriented toward the battery cells; and a circuit portion connected to the thermistor that is configured to receive the measured temperature information from the thermistor. Accordingly, the reliability of the temperature measurement with respect to the battery cells may be improved.

## Description

### BACKGROUND

### 1. Field

The disclosure relates to a battery pack.

### 2. Description of the Related Art

Generally, a secondary battery is a battery that is recharged and discharged, unlike a primary battery that is not rechargeable. A secondary battery may be used as an energy source of a mobile device, an electric vehicle, a hybrid vehicle, an electric bicycle, an uninterruptible power supply, etc. and it may be used in the form of a single battery or as a pack in which a plurality of batteries are grouped in a unit depending on the type of external device to which the secondary battery is applied.

A small mobile device, such as a cellular phone, may operate for a predetermined period of time with the output and capacity of a single battery, whereas a mobile device, such as a notebook computer, having a relatively great size, a vehicle, such as an electric vehicle or a hybrid vehicle, consuming relatively large power and requiring an operation of a long duration and high power prefers a battery pack including a plurality of batteries for the output and the capacity issues, and an output voltage or an output current may be increased according to the number of batteries housed in such a battery pack.

### SUMMARY

One or more embodiments include a battery pack in which an assembling piece that is configured to control an assembling position and an assembling posture of a thermistor for measuring a temperature of battery cells or a measurement line portion on which the thermistor is mounted may be formed on a cell holder, and thus relative positions of the battery cells and the thermistor for measuring the temperature of the battery cells may be precisely controlled. The assembling piece is configured to control the assembling position and the assembling posture (orientation) of the thermistor or the measurement line portion on which the thermistor is mounted such that it is oriented downward toward an upper end portion of the battery cells at a position on the upper end portion of the battery cells that does not to deviate (or substantially does not to deviate) from the battery cells, and thus the reliability of the temperature measurement with respect to the battery cells may be improved.

Additional aspects will be set forth in part in the description which follows and, in part, will be apparent from the description, or may be learned by practice of the presented embodiments of the present disclosure.

One or more embodiments include a battery pack including a plurality of battery cells, a thermistor configured to measure temperature information of at least one of the plurality of battery cells, a cell holder configured to control an assembling position of the plurality of battery cells and including an assembling piece configured to bias an assembling position of the thermistor to substantially not deviate from the battery cells and the assembling posture of the thermistor oriented toward the battery cells; and a circuit portion connected to the thermistor that is configured to receive the measured temperature information from the thermistor.

For example, the assembling piece may further be configured to bias an assembling position and an assembling posture of a measurement line portion on which the thermistor is mounted.

For example, the assembling piece may be configured to force the assembling posture of each of the thermistor and the measurement line portion to be oriented downward toward the plurality of battery cells, and the assembling position of the measurement line portion on which the thermistor is mounted may be on an upper end portion of the plurality of battery cells

For example, the assembling piece may be configured to control the assembling position and the assembling posture of the measurement line portion on which the thermistor is mounted such that the measurement line portion on which the thermistor is mounted contacts the upper end portion of the battery cells.

For example, the assembling piece may include an assembling slit piece and an assembling guide piece at opposite sides of the measurement line portion on which the thermistor is mounted.

For example, the assembling slit piece may include a downwardly inclined edge configured to force a downward bending of the measurement line portion on which the thermistor is mounted.

For example, the assembling slit piece may include an assembling slit configured to allow passing of the measurement line portion on which the thermistor is mounted, the measurement line portion extending from a second connection line portion supported on a support plate of the cell holder and connected to the circuit portion.

For example, the assembling slit piece may be between the support plate of the cell holder supporting the second connection line portion from which the measurement line portion on which the thermistor is mounted extends and which is connected to the circuit portion, and the downwardly inclined edge of the assembling slit piece in the assembling piece that is configured to control the assembling position and the assembling posture of the measurement line portion.

For example, the measurement line portion on which the thermistor is mounted may be bent while being inserted and assembled into the assembling piece, and the measurement line portion may be bent from an upper position to a lower position with respect to a second connection line portion from which the measurement line portion extends and which is connected to the circuit portion.

For example, the measurement line portion on which the thermistor is mounted may provide a marginal length remaining after forming contact with an upper end portion of the battery cells through a portion bent toward the upper position with respect to the second connection line portion.

For example, the plurality of battery cells may be arranged in a plurality of columns, each of which includes a plurality of battery cells in a first direction, the plurality of columns being arranged in a second direction crossing the first direction, and the assembling piece may surround the thermistor or the measurement line portion on which the thermistor is mounted in an open-loop shape that is open in a plane formed by the first and second directions.

For example, the assembling piece may surround the thermistor or the measurement line portion on which the thermistor is mounted in the open-loop shape that is open through first and second openings at opposite sides of the thermistor or the measurement line portion on which the thermistor is mounted.

For example, the first opening may be configured to allow the measurement line portion on which the thermistor is mounted to extend from a second connection line portion connected to the circuit portion, and the second opening at an opposite side to the first opening may be configured to allow a distance between an assembling slit piece and an assembling guide piece of the assembling piece.

For example, the assembling slit piece and the assembling guide piece may be spaced apart from each other through the first and second openings.

For example, the assembling slit piece and the assembling guide piece may surround different sides of the thermistor or the measurement line portion on which the thermistor is mounted.

For example, the thermistor may be mounted on the measurement line portion extending from the second connection line portion in a direction crossing the first direction, the second connection line portion being connected to the circuit portion and extending in the first direction in which the plurality of the battery cells are arranged, and the assembling slit piece and the assembling guide piece may be spaced apart from each other in the first direction.

For example, the assembling slit piece and the assembling guide piece may include a first segment extending in the second direction crossing the first direction, and the assembling slit piece may further include a second segment extending in the first direction and may further include, between the first and second segments, a third segment extending in a diagonal direction with respect to the first and second directions.

For example, the plurality of battery cells may be arranged in a plurality of columns each including a plurality of battery cells arranged in a first direction, and the plurality of columns may be arranged in a second direction crossing the first direction.

For example, the assembling piece may surround the thermistor or the measurement line portion on which the thermistor is mounted in an open-loop shape that is open through first and second openings formed at opposite sides to each other in the second direction in a plane formed by the first and second directions.

For example, an assembling slit piece and an assembling guide piece of the assembling piece may be spaced apart from each other in the first direction and may be spaced apart from each other through the first and second openings at the opposite sides to each other in the second direction crossing the first direction.

One or more embodiments include an electric vehicle including a battery pack as a power source.

### BRIEF DESCRIPTION OF THE DRAWINGS

The above and other aspects, features, and advantages of certain embodiments of the present disclosure will be more apparent from the following description taken in conjunction with the accompanying drawings, in which:

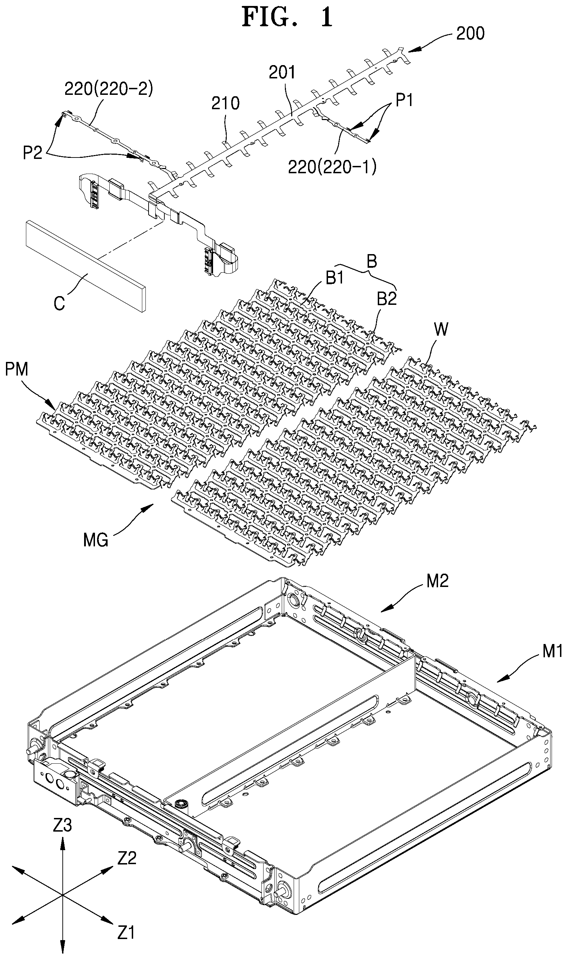

FIG. 1 is a perspective view of a battery pack according to embodiments of the present disclosure, the perspective view showing: first and second battery modules arranged adjacent to each other in a first direction; a bus bar forming an electrical connection between a plurality of battery cells included in each of the first and second battery modules; and a flexible printed circuit (FPC) including a first connection line portion for electrically connecting the first and second battery modules to each other and a second connection line portion for transmitting temperature information measured from a battery cell selected from among the plurality of battery cells forming the first and second battery modules. The perspective also shows a cell holder in which first and second positions are indicated at which a thermistor, which is configured to transmit temperature information of some battery cells selected from the plurality of battery cells included in each of the first and second battery modules, is connected to a measurement line portion extending from the second connection line portion, or at which an assembling piece for controlling an assembling position and an assembling posture (orientation) of the measurement line portion is formed;

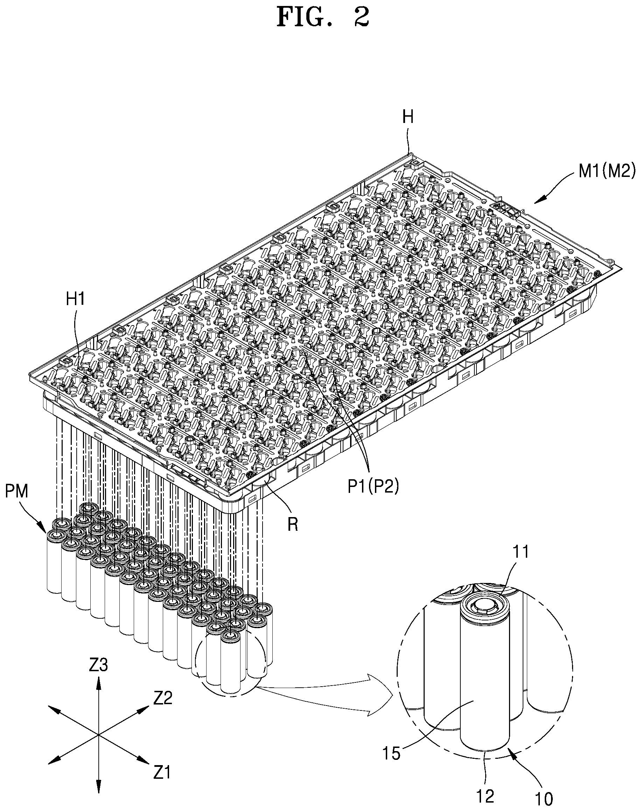

FIG. 2 is a perspective view of a cell holder in which the plurality of battery cells included in the first battery module or the second battery module, the bus bar electrically connecting the plurality of battery cells to each other, and the second connection line portion for transmitting the temperature information of the battery cell selected from among the plurality of battery cells, illustrated in FIG. 1, are assembled, wherein, in the cell holder, the first and second positions are indicated at which the thermistor configured to transmit the temperature information of the battery cell is connected to the measurement line portion extending from the second connection line portion or at which the assembling piece for controlling the assembling position and the assembling posture of the measurement line portion is formed;

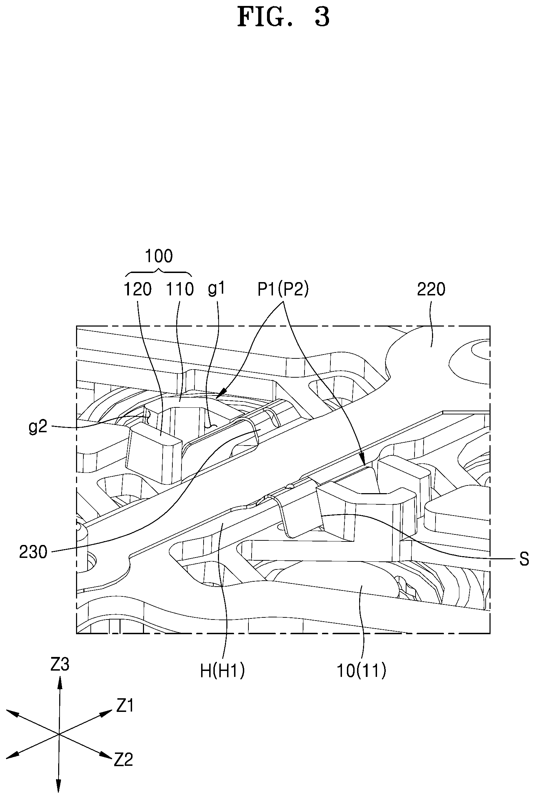

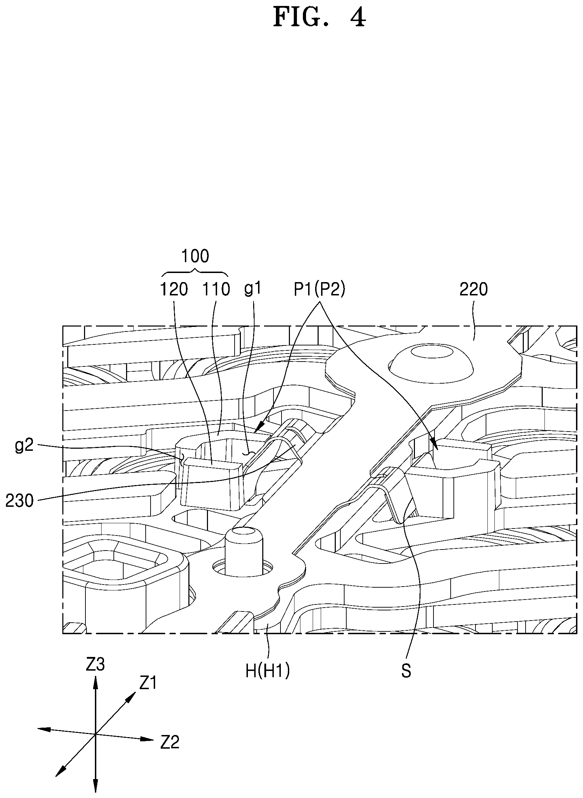

FIGS. 3 to 5 are different perspective views of the second connection line portion illustrated in each of FIGS. 1 and 2 and a support plate of the cell holder for supporting the second connection line portion, the different perspective views being shown to describe a structure of the assembling piece of the cell holder for controlling the assembling position and the assembling posture (orientation) of the measurement line portion extending from the second connection line portion at the first and second positions of FIGS. 1 and 2;

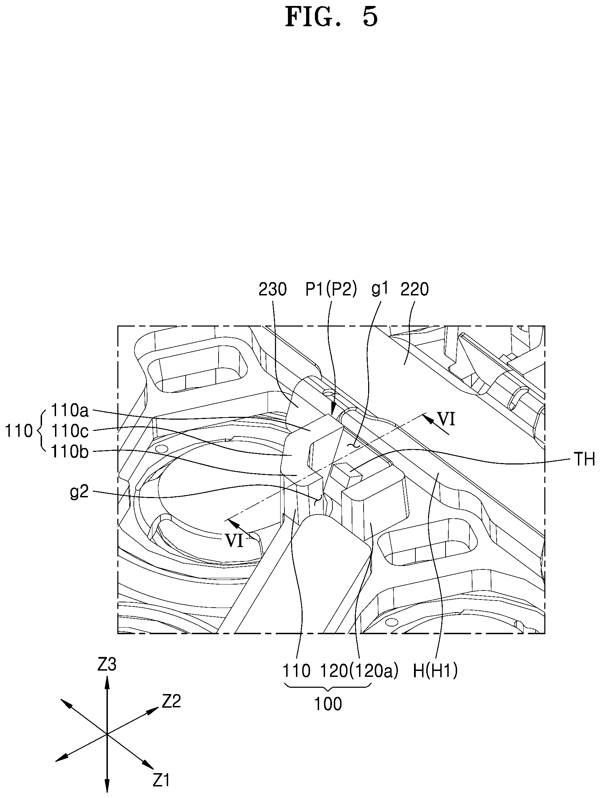

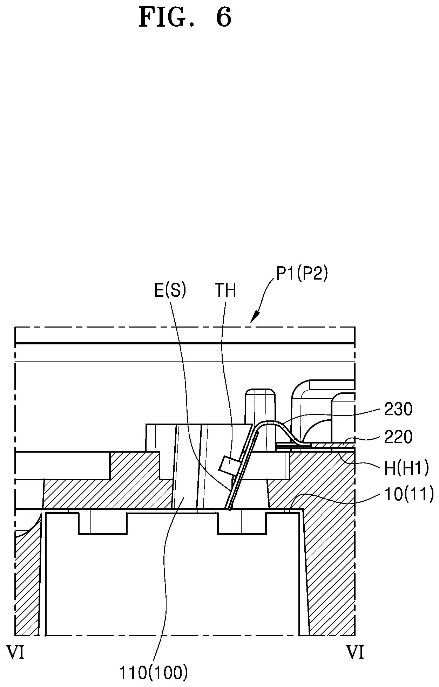

FIG. 6 is a cross-sectional view of the second connection line portion and the support plate of the cell holder of FIG. 5, taken along line VI-VI, the cross-sectional view showing a structure of the assembling piece of the cell holder; and

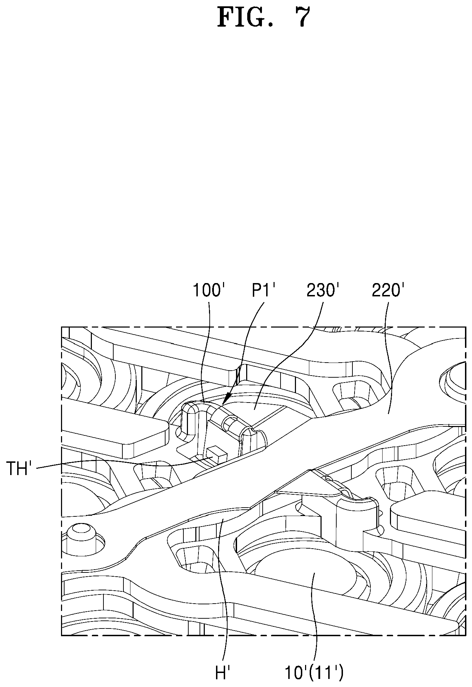

FIG. 7 is a perspective view of a battery pack according to a comparative embodiment, which is illustrated to describe a structure of an assembling piece on which a measurement line portion, on which a thermistor is mounted, is mounted.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments of the present disclosure is described, with reference to the accompanying drawings.

FIG. 1 is a perspective view of a battery pack according to embodiments of the present disclosure, the perspective view showing: first and second battery modules M1 and M2 adjacent to each other in a first direction Z1; a bus bar B forming an electrical connection between a plurality of battery cells 10 included in each of the first and second battery modules M1 and M2; and a flexible printed circuit (FPC) including a plurality of first connection line portions 210 for electrically connecting the first and second battery modules M1 and M2 to each other and at least one second connection line portion 220 for transmitting temperature information measured from the battery cell 10 selected from among the plurality of battery cells 10 of the first and second battery modules M1 and M2, and a cell holder H. FIG. 1 indicates first and second positions P1 and P2 at which a thermistor TH is configured to transmit temperature information of some battery cells 10 included in each of the first and second battery modules M1 and M2 is connected to a measurement line portion 230 spaced apart from the second connection line portion 220. FIG. 1 also indicates the first and second positions P1 and P2 at which an assembling piece 100 for controlling an assembling position and an assembling posture of the measurement line portion 230.

FIG. 2 is a perspective view of a structure of the cell holder H in which the plurality of battery cells 10 included in the first battery module M1 or the second battery module M2, the bus bar B electrically connecting the plurality of battery cells 10 to each other, and the second connection line portion 220 for transmitting the temperature information of the battery cell 10 selected from among the plurality of battery cells 10. In FIG. 2, in the cell holder H, the first and second positions P1 and P2 at which the thermistor TH configured to transmit the temperature information of the battery cell 10 is connected to the measurement line portion 230 spaced apart from the second connection line portion 220 or the first and second positions P1 and P2 at which the assembling piece 100 for controlling the assembling position and the assembling posture of the measurement line portion 230 are indicated.

Referring to FIGS. 1 and 2, the battery pack according to embodiments of the present disclosure may include: the first and second battery modules M1 and M2 adjacent to each other in the first direction Z1; the plurality of bus bars B for electrically connecting the plurality of battery cells 10 included in each of the first and second battery modules M1 and M2; the first connection line portion 210 for electrically connecting the bus bars B of the first and second battery modules M1 and M2 to each other; and the one or more second connection line portions 220 for transmitting the temperature information measured from the battery cell 10 selected from among the plurality of battery cells 10 forming the first and second battery modules M1 and M2. According to one or more embodiments of the present disclosure, the first and second connection line portions 210 and 220 may extend away from (e.g., branch off of) a line main body 201 extending in a second direction Z2 between the first and second battery modules M1 and M2 adjacent to each other in the first direction Z1, and the first and second connection line portions 210 and 220 and the line main body 201 may form the FPC 200 connected to a circuit portion C of the battery back. In one or more embodiments, the FPC 200 may be connected to the circuit portion C to transmit state information such as a current or a voltage on a charge or discharge path of the first and second battery modules M1 and M2 or it may be connected to the circuit portion C to transmit the temperature information of some battery cells 10 selected from among the plurality of battery cells 10 of the first and second battery modules M1 and M2. As described below, the circuit portion C may receive the state information, such as the voltage, current, and/or temperature of the battery cell 10, through the FPC 200, and according to the received state information of the battery cell 10, the circuit portion C may generate a switch control signal for controlling opening and closing of a charge and discharge switch formed on the charge and discharge path of the battery cell 10.

In FIG. 1, an assembling position may indicate the position in which each battery cell 10 is assembled. As illustrated in FIG. 1, the plurality of battery cells 10 included in the battery pack may include the battery cells 10 arranged in a plurality of columns in the first direction Z1 and the battery cells 10 arranged in a plurality of columns in the second direction Z2. Each of the battery cells 10 arranged in the plurality of columns in the first direction Z1 may correspond to each of the battery cells 10 arranged in each of the plurality of columns in the second direction Z2.

The plurality of battery cells 10 included in the battery pack according to embodiments of the present disclosure may include the battery cells 10 arranged in the plurality of columns in the first direction Z1 and the battery cells 10 arranged in the plurality of columns in the second direction Z2. Each of the battery cells 10 arranged in the plurality of columns in the first direction Z1 may correspond to each of the battery cells 10 arranged in each of the plurality of columns in the second direction Z2. As described below, the battery cells 10 arranged in the same column in the first direction Z1 may form a parallel module PM, with the same polarities of the battery cells 10 being connected to each other, and the battery cells 10 arranged in different columns in the second direction Z2 may be serially connected to each other with different polarities of the battery cells being connected to each other. For example, the battery pack according to embodiments of the present disclosure may include the plurality of battery cells 10 in which the parallel module PM in the first direction Z1 is serially connected to another parallel module PM adjacent thereto in the second direction Z2 such that an electrical connection in which both a serial connection and a parallel connection are combined is formed. For example, according to embodiments of the present disclosure, the battery cells 10 in the columns in the first direction Z1 from among the plurality of battery cells 10 may be connected to each other in parallel, thereby forming the parallel module PM, and the battery cells 10 in the columns adjacent to each other in the second direction Z2 may be connected to each other in series, thereby forming a serial connection between the parallel modules PM adjacent to each other in the second direction Z2. As described above, according to embodiments of the present disclosure, the battery pack may include the plurality of battery cells 10 connected to each other in a combination of a serial connection and a parallel connection according to the output and capacity required by a device to which the battery pack supplies power, and the battery pack may include a combination of a serial connection and a parallel connection according to the output and capacity of the device.

The battery pack according to embodiments of the present disclosure may include the bus bar B for electrically connecting the different battery cells 10. The bus bar B may connect the different battery cells 10 to each other, and thus may electrically connect the different battery cells 10 to each other to form the output of the battery pack including the plurality of battery cells 10. For example, the bus bar B may include a main body portion B1 extending in the first direction Z1 and a plurality of branch portions B2 extending from the main body portion B1 in a direction crossing the first direction Z1 and extending between the plurality of battery cells 10. For example, the main body portion B1 of the bus bar B may connect the battery cells 10 arranged in the columns extending in the first direction Z1 in parallel with each other (that form the parallel module PM) and may serially connect the battery cells 10 arranged in the columns adjacent to each other with the main body portion B1 extending in the first direction Z1 therebetween (serially connect the adjacent parallel modules PM). For example, according to embodiments of the present disclosure, the branch portions B2 may include the plurality of branch portions B2 extending from the main body portion B1 extending in the first direction Z1 in the direction crossing the first direction Z1. The branch portion B2 may be extend from the main body portion B1 extending in the first direction Z1 to be adjacent to each of the battery cells 10 to form an electrical connection with each of the battery cells 10.

The battery pack according to embodiments of the present disclosure may further include a contact member W forming an electrically connection between the battery cell 10 and the branch portion B2 extending from the main body portion B1 of the bus bar B toward a position adjacent to each of the battery cells 10. The contact member W may connect the same polarities of the battery cells 10 in the same columns to form the parallel module PM or may connect different polarities of the battery cells 10 included in the columns adjacent to each other to form a serial connection between the different parallel modules PM. For example, the contact member W may include an end connected to the branch portion B2 and the other end extending from the branch portion B2 at one end and connected to an electrode of the battery cell 10, and the contact member W may be a metal thin line such as a wire connected between the branch portion B2 at one end and the electrode of the battery cell 10 at another end.

According to embodiments of the present disclosure, the bus bar B may include the plurality of main body portions B1 each extending in the first direction Z1 and arranged in the second direction Z2 crossing the first direction Z1 and the plurality of branch portions B2 extending from each of the main body portions B1 toward each other, such that the plurality of branch portions B2 extending toward each other from the main body portions B1 and arranged to be adjacent to each other in the second direction Z2, may be alternately inserted into the bus bar B in a comb shape (e.g., an interlaced or interspersed shape).

According to embodiments of the present disclosure, the branch portion B2 of the bus bar B may extend from the main body portion B1 of the bus bar B, which extends in the first direction Z1, in a direction crossing the first direction Z1. For example, the branch portion B2 of the bus bar B may extend from the main body portion B1 of the bus bar B in a diagonal direction with respect to the first direction Z1 and the second direction Z2. Also, through the branch portion B2 extending in the diagonal direction (with respect to the first and second directions Z1 and Z2) between the battery cells 10, which are arranged in a zigzag shape between the adjacent columns such that the battery cells 10 in one column are inserted between the battery cells 10 in the adjacent columns, the electrical connection between the battery cells 10 in the adjacent columns may be formed.

According to embodiments of the present disclosure, the battery cell 10 may form an electrical connection through one of an upper end portion 11 or a lower end portion 12 of the battery cell 10 in an upward direction and a downward direction in a third direction Z3 crossing the first and second directions Z1 and Z2 and may not form an electrical connection through the other. For example, the battery cell 10 may include a first electrode in the central position of the upper end portion 11 and a second electrode extending from the lower end portion 12 to an edge position of the upper end portion 11 through a circumferential surface 15 connecting the upper end portion 11 with the lower end portion 12. The first and second electrodes of the battery cell 10 may be together in the upper end portion 11 of the battery cell 10. For example, the first and second electrodes of the battery cell 10 may be in the central position and the edge position, respectively, of the upper end portion 11 that are apart from each other with an insulating gap therebetween. According to embodiments of the present disclosure, both the contact member W forming conductive contact with the first electrode in the central position of the upper end portion 11 of the battery cell 10 and the contact member W forming conductive contact with the second electrode in the edge position of the upper end portion 11 of the battery cell 10 may form an electrical connection with the upper end portion 11 of the battery cell 10. Also, the battery cell 10 may form an electrical connection through the upper end portion 11, but it may not form an electrical connection through the lower end portion 12 of the battery cell 10. According to embodiments of the present disclosure, through one of the upper end portion 11 or the lower end portion 12, which are at opposite ends in the third direction Z3 crossing the first and second directions Z1 and Z2, the entire electrical connection of the battery cell 10 may be realized, and through the other, the electrical connection of the battery cell 10 may not be realized. According to embodiments of the present disclosure, through the other end, which is the opposite to the one end through which the electrical connection is realized, the battery cell 10 may be cooled, and in order that the electrical connection and the cooling of the battery cell 10 do not physically and electrically interfere with each other, the electrical connection and the cooling of the battery cell 10 may be spatially separated from each other. For example, to achieve a very compact and space saving design, through the upper end portion 11 of the battery cell 10, the electrical connection may be realized, and through the lower end portion 12 of the battery cell 10, the cooling may be realized. In one or more embodiments, a cooling plate configured to form thermal contact with the battery cell 10 by extending across the lower end portion 12 of the battery 10 may be arranged in the lower end portion 12 of the battery cell 10.

The plurality of battery cells 10 included in the battery pack according to embodiments of the present disclosure may include the upper end portion 11 having a circular shape, the lower end portion 12 having a circular shape, and the circumferential surface 15 connecting the upper end portion 11 with the lower end portion 12. For example, the battery cell 10 may have a circular cross-sectional shape including an approximately cylindrical-shaped exterior shape.

According to embodiments of the present disclosure, the battery pack may include the first and second battery modules M1 and M2 that are different from each other and arranged in the first direction Z1. For example, the first and second battery modules M1 and M2 that are different from each other and arranged in the first direction Z1 may be electrically connected to each other through the line main body 201 extending in the second direction Z2 between the first and second battery modules M1 and M2 arranged in the first direction Z1 and the first connection line portion 210 extending from the line main body 201 toward each of the first and second battery modules M1 and M2. Also, through the first connection line portion 210 extending toward the bus bar B of the first and second battery modules M1 and M2 along the first direction Z1 from the line main body 201 extending in the second direction Z2 along a module gap MG between the first and second battery modules M1 and M2, the bus bar B of the first and second battery modules M1 and M2 may be electrically connected to each other. According to embodiments of the present disclosure, the line main body 201 extending along the second direction Z2 along the module gap MG between the first and second battery modules M1 and M2 arranged in the first direction Z1 and the first and second connection line portions 210 and 220 extending along the first direction Z1 from the line main body 201 toward the first and second battery modules M1 and M2 may form the FPC 200 that is electrically connected to the circuit portion C of the battery pack.

According to embodiments of the present disclosure, the line main body 201 may extend along the module gap MG in the second direction Z2 between the first and second battery modules M1 and M2 that are adjacent to each other in the first direction Z1. Also, in order to form an electrical connection between the line main body 201 extending in the second direction Z2 along the module gap MG and the bus bar B (the main body portion B1 of the bus bar B) of each of the first and second battery modules M1 and M2, so as to form an electrical connection with the bus bar B (the main body portion B1 of the bus bar B) of each of the first and second battery modules M1 and M2 adjacent to each other in the first direction Z1 which is approximately in the opposite direction from the line main body 201 arranged on the module gap MG, the first connection line portion 210 may extend from the line main body 201 toward the bus bar B of each of the first and second battery modules M1 and M2. For example, the first connection line portions 210 that extend in approximately opposite directions along the first direction Z1 from the line main body 201, which extends in the second direction Z2 between the first and second battery modules M1 and M2 adjacent to each other in the first direction Z1, may form an electrical connection with the bus bar B (an end of the main body portion B1 of the bus bar B) of each of the first and second battery modules M1 and M2.

According to embodiments of the present disclosure, the FPC 200 may electrically connect the first battery module M1 with the second battery module M2, which are adjacent to each other in the first direction Z1, may receive state information such as a voltage and a current on a charge or discharge path of the first and second battery modules M1 and M2, and may transmit the information to a battery management system (BMS) as the circuit portion C of the battery pack. According to embodiments of the present disclosure, the FPC 200 may collect temperature information from some battery cells 10 selected from among the plurality of battery cells 10 of the first and second battery modules M1 and M2 and transmit the temperature information to the BMS as the circuit portion C of the battery pack. For example, according to embodiments of the present disclosure, the FPC 200 may electrically connect the first and second battery modules M1 and M2 to each other, the first and second battery modules M1 and M2 being arranged adjacent to each other in the first direction Z1, may collect the state information from some of the battery cells 10 of the first and second battery modules M1 and M2, and may transmit the state information to the BMS as the circuit portion C of the battery pack.

For example, according to embodiments of the present disclosure, the FPC 200 may include the line main body 201 and the first and second connection line portions 210 and 220 extending from the line main body 201 toward the first and second battery modules M1 and M2 approximately in the first direction Z1. For example, according to embodiments of the present disclosure, the line main body 201 may extend in the second direction Z2 along the module gap MG between the first and second battery modules M1 and M2 that are arranged adjacent to each other in the first direction Z1, the plurality of first connection line portions 210 may extend intermittently from the line main body 201 in the second direction Z2 may extend approximately in the first direction Z1, and the line main body 201 may form an electrical connection with the bus bar B (the main body portion B1 of the bus bar B) of the first and second battery modules M1 and M2.

According to embodiments of the present disclosure, the first and second connection line portions 210 and 220 extending approximately in the first direction Z1 from the line main body 201 extending in the second direction Z2 along the module gap MG may include the first connection line portion 210 forming the electrical connection with the bus bar (the main body portion B1 of the bus bar B) of the first and second battery modules M1 and M2 and the second connection line portion 220 configured to transmit the temperature information of the battery cell 10 forming the first and second battery modules M1 and M2. Also, from among the first and second connection line portions 210 and 220 extending from the line main body 201 extending in the second direction Z1 approximately along the first direction Z1, the number of first connection line portions 210 extending from the main body 201 in the second direction Z2 may be greater the number of second connection line portions 220 extending from the main body 201 in the second direction Z2.

For example, the number of first connection line portions 210 may correspond to the number of bus bars B (the main body portions B1 of the bus bars B) in the first and second battery modules M1 and M2.

For example, the second connection line portion 220 may be configured to transmit the temperature information measured from some battery cells 10 from among the plurality of battery cells 10 of the first and second battery modules M1 and M2. According to embodiments of the present disclosure, the second connection line portion 220 may be configured to transmit the temperature information measured from some selected battery cells 10 corresponding to the first and second positions P1 and P2 on the first and second battery modules M1 and M2. The second connection line portion 220 may extend from the line main body 201 extending in the second direction Z2 toward the first and second positions P1 and P2 of the first and second battery modules M1 and M2 along the second direction Z2.

According to embodiments of the present disclosure, the first and second positions P1 and P2 of the first and second battery modules M1 and M2 may correspond to temperature measurement positions of the first and second battery modules M1 and M2 along the second connection line portions 220 extending along the second direction Z2. According to embodiments of the present disclosure, the first and second positions P1 and P2 of the first and second battery modules M1 and M2 may be different positions along the second direction Z2. For example, according to embodiments of the present disclosure, the first and second battery modules M1 and M2 may have a substantially symmetrical shape. For example, the number of battery cells 10 or an electrical connection of the battery cells 10 forming the first and second battery modules M1 and M2 may be provided such that the first and second battery modules M1 and M2 may have a substantially symmetrical shape with each other. Thus, temperature distribution due to the heating of the first and second battery modules M1 and M2 may be predicted to have an approximately symmetrical temperature profile. Thus, according to embodiments of the present disclosure, the temperature measurement positions (the first and second positions P1 and P2 set on the first and second battery modules M1 and M2 for transmitting the measured temperature information) may be different positions in the second direction Z2. Thus, the temperature measurement positions may be configured to prevent repeatedly measuring the temperature in substantially symmetrical positions on the first and second battery modules M1 and M2 or repeatedly transmitting the substantially repeatedly measured temperature information. According to embodiments of the present disclosure, the first and second positions P1 and P2 to which the second connection line portion 220 extends from the line main body 201 may be different positions from each other in the second direction Z2. Thus, while the number of temperature measurement positions on the first and second battery modules M1 and M2 (i.e., the number of first and second positions P1 and P2 for transmitting the measured temperature information) may be minimized, the overall temperature distribution in the battery pack including the first and second battery modules M1 and M2 may be determined. Thus, while the number of thermistors TH for temperature measurement may be reduced, the temperature measurement positions on the first and second battery modules M1 and M2 (i.e., the first and second positions P1 and P2 for transmitting the measured temperature information) may be different positions along the second direction Z2. Thus, the general temperature distribution or the temperature profile in the battery pack including the first and second battery modules M1 and M2 may be predicted or determined by using a limited number of thermistors TH, which reduces the overall cost.

For example, referring to FIG. 1, according to embodiments of the present disclosure, the first position P1 of the first battery module M1 may be a back end of the first battery module M1 at a central position of the first battery module M1 in the second direction Z2 or adjacent to the central position of the first battery module M1. However, the second position P2 of the second battery module M2 may be at a front end of the second battery module M2 and adjacent to a front position of the second battery module M2 in which the BMS is arranged as the circuit portion C of the battery pack. As described above, according to embodiments of the present disclosure, the first and second positions P1 and P2 may be respectively at the back end and the front end that are opposite to each other in the second direction Z2. The first position P1 may be at the central position of the first battery module M1 or adjacent to the central position of the first battery module M1 at which heat accumulation may be relatively larger due to the distance between the battery pack and the outside. In one or more embodiments, the first position P1 may be at the back end that is opposite to the second position P2 in the second direction Z2. In one or more embodiments, the second position P2 may be at the front end of the first battery module M1 at which the BMS is arranged as the circuit portion C of the battery pack.

According to embodiments of the present disclosure, the first and second positions P1 and P2 may denote the positions at which the temperature information measured from the battery cell 10 in the second direction Z2 is transmitted. For example, in an embodiment in which the plurality of first and second positions P1 and P2 are along the second connection line portion 220 extending approximately in the first direction Z1 from the line main body 201 extending in the second direction Z2, the first and second positions P1 and P2 may include the plurality of first and second positions P1 and P2, and the plurality of first and second positions P1 and P2 may form groups of the first and second positions P1 and P2 aligned with each other or adjacent to each other approximately in the second direction Z2.

According to embodiments of the present disclosure, an extension length of the first connection line portion 210 and an extension length of the second connection line portion 220, extending approximately in the first direction Z1 along the line main body 201 extending in the second direction Z2 on the module gap MG between the first and second battery modules M1 and M2, may satisfy the relationship of the extension length of the first connection line portion 210 being less than the extension length of the second connection line portion 220. According to embodiments of the present disclosure, the first connection line portion 210 may extend to the bus bar B (the main body portion B1 of the bus bar B) outside each of the first and second battery modules M1 and M2, from the line main body 201 by a relatively short length. However, the second connection line portion 220 may extend to the temperature measurement positions (for example, the first and second positions P1 and P2) inside each battery module from the line main body 201 by a relatively long length.

According to embodiments of the present disclosure, the temperature measured from the temperature measurement position may be transmitted through the second connection line portion 220, and all of the temperature information measured from a plurality of temperature measurement positions may be transmitted altogether through the one second connection line portion 220. Referring to FIG. 1, according to embodiments of the present disclosure, the second connection line portion 220 may include a second-1 connection line portion 220-1 and a second-2 connection line portion 220-2 extending toward the first and second positions P1 and P2, respectively, in opposite directions along the second direction Z2 from the line main body 201 that extends along the module gap MG between the first and second battery modules M1 and M2 adjacent to each other in the second direction Z2. For example, the second-1 connection line portion 220-1 may extend toward the first position P1 of the first battery module M1 in the first direction Z1 from the first position P1 that is rearwardly biased to be opposite to the second-2 connection line portion 220-2 with respect to a central portion of a substantially central position from the line main body 201 extending in the second direction Z2 (i.e., at the position rearwardly biased to be opposite to a front end which is adjacent to the central position in the second direction Z2 and at which the second-2 connection line portion 220-2 is arranged). Also, the second-2 connection line portion 220-2 may extend toward the first position P2 of the second battery module M2 from the line main body 201 extending in the second direction Z2 along the first direction Z1 from the position forwardly biased to be adjacent to the BMS as the circuit portion C of the battery pack.

According to embodiments of the present disclosure, the plurality of first and second positions P1 and P2 may be formed on the second-1 connection line portion 220-1 and the second-2 connection line portion 220-2, respectively, along the first direction Z1. The first and second positions P1 and P2 may correspond to the temperature measurement positions or the positions to transmit the measured temperature on the first and second battery modules M1 and M2. Also, the first and second positions P1 and P2 may be understood as the position for transmitting the temperature information measured from the temperature measurement positions at substantially the same position as the temperature measurement positions on the first and second battery modules M1 and M2. According to embodiments of the present disclosure, the plurality of first positions P1 (the temperature measurement positions or the positions for transmitting the temperature information measured from the temperature measurement positions) may be in the first direction Z1 along the second-1 connection line portion 220-1, and to this end, the plurality of thermistors TH configured to measure the temperature of the different battery cells 10 may be arranged at the plurality of first positions P1 set along the second-1 connection line portion 220-1. For example, the plurality of thermistors TH configured to measure the temperatures of some selective battery cells 10 from among the plurality of battery cells 10 may be connected along the second-1 connection line portion 220-1 extending in the first direction Z1. The first position P1 at which the plurality of thermistors TH are arranged or the first position P1 at which the plurality of thermistors TH and the second-1 connection line portion 220-1 are connected to each other to transmit the temperature information measured from the plurality of thermistors TH may form a group of the first positions P1 at the same position or adjacent positions in the second direction Z2. For example, the plurality of first positions P1 on the second-1 connection line portion 220-1 may be at the same position or adjacent positions on the line main body 201 extending in the second direction Z2 along the module gap MG.

Similarly to the second-1 connection line portion 220-1, the plurality of second positions P2 (the temperature measurement positions or the positions for transmission of the temperature information measured from the temperature measurement positions) may be set in the first direction Z1 along the second-2 connection line portion 220-2. To this end, the plurality of thermistors TH configured to measure the temperatures of the different battery cells 10 may be arranged in the plurality of second positions P2 set along the second-2 connection line portion 220-2. For example, the plurality of thermistors TH configured to measure the temperatures of some selective battery cells 10 from among the plurality of battery cells 10 may be connected along the second-2 connection line portion 220-2 extending in the first direction Z1, and the second positions P2 at which the plurality of thermistors TH are arranged or the second positions P2 at which the plurality of thermistors TH and the second-2 connection line portion 220-2 are connected to each other so that the temperature information measured from the plurality of thermistors TH is transmitted, may form a group of the second positions P2 at the same position or adjacent positions in the second direction Z2. For example, the plurality of second positions P2 on the second-2 connection line portion 220-2 may be at the same position or at adjacent positions on the line main body 201 extending in the second direction Z2 along the module gap MG.

FIGS. 3 to 5 are different perspective views of the second connection line portion 220 illustrated in each of FIGS. 1 and 2 and the support plate H1 of the cell holder H for supporting the second connection line portion 220. The different perspective views depict a structure of the assembling piece 100 of the cell holder H configured to control the assembling position and the assembling posture of the measurement line portion 230 extending from the second connection line portion 220 at the first and second positions P1 and P2 of FIGS. 1 and 2.

FIG. 6 is a cross-sectional view of the second connection line portion 220-2 and the support plate of the cell holder H of FIG. 5, taken along line VI-VI, the cross-sectional view showing a structure of the assembling piece 100 of the cell holder H.

Referring to the FIGS. 3 to 6, according to embodiments of the present disclosure, the thermistor TH connected to the second connection line portion 220 to receive the temperature information from the second connection line portion 220 may be connected to the measurement line portion 230 extending from the second connection line portion 220. For example, according to embodiments of the present disclosure, the measurement line portion 230 may extend from the second connection line portion 220, which extends in the first direction Z1, along the second direction Z2, and may be arranged to have an inclined orientation or posture downwardly biased toward the upper end portion 11 of the battery cell 10 along the third direction Z3 crossing the first and second directions Z1 and Z2.

According to embodiments of the present disclosure, the thermistor TH may be assembled to be surrounded by the assembling piece 100 on the cell holder H for biasing or controlling the assembling position of the plurality of battery cells 10 and fastening the plurality of battery cells 10 to each other at their controlled assembling positions. For example, according to embodiments of the present disclosure, to force the assembling of the thermistor TH and the battery cells 100 in positions in which the therm istor TH and the battery cells 100 are close to each other, each of the therm istor TH and the battery cells 10 may have its assembling position biased or controlled by the cell holder H, which is one component configured to control both of the assembling position of the thermistor TH and the assembling position of the battery cells 10. For example, an assembling rib R (see FIG. 2) configured to control the assembling position of the battery cells 10 and the assembling piece 100 configured to control the assembling position of the thermistor TH may be formed together on the cell holder H. The assembling position may be forced or caused by each of the assembling rib R (see FIG. 2) and the assembling piece 100 and the assembling rib R (see FIG. 2) and the assembling piece 100 may be formed in a single component, that is, the cell holder H. Accordingly, the relative position between the battery cells 10 and the thermistor TH may be controlled, and the battery cells 10 and the thermistor TH may be assembled in the assembling position in which the thermistor TH and the battery cells 10 are adjacent to each other.

According to embodiments of the present disclosure, the assembling piece 100, which is configured to control the assembling position of the thermistor TH, may surround at least a portion of the thermistor TH. For example, the assembling piece 100 of the cell holder H may surround opposite sides of the thermistor TH opposite to each other. For example, according to embodiments of the present disclosure, the assembling piece 100 may include an assembling slit piece 110 and an assembling guide piece 120 arranged at opposite positions on opposite sides of the thermistor TH. In one or more embodiments, the assembling piece 100 may include the assembling slit piece 110 providing an assembling slit S into which the thermistor TH or the measurement line portion 230 on which the thermistor TH is mounted is inserted, and the assembling guide piece 120 surrounding the thermistor TH at an opposite position to the assembling slit piece 110. According to embodiments of the present disclosure, the assembling position of the thermistor TH may be controlled between the assembling slit piece 110 and the assembling guide piece 120 surrounding the thermistor TH at opposite positions on opposite sides of the thermistor. The thermistor TH surrounded by the assembling slit piece 110 and the assembling guide piece 120, which control the assembling position of the thermistor TH at opposite sides of the thermistor TH, may accurately capture the temperature of the battery cells 10 at a position adjacent to the battery cell 10. The position of the thermistor may not deviate from the battery cells 10 due to a guide of the assembling slit piece 110 and the assembling guide piece 120.

According to embodiments of the present disclosure, the assembling piece 100 including the assembling slit piece 110 and the assembling guide piece 120 may realize a bent shape of the measurement line portion 230 on which the thermistor TH is mounted and also realize assembling of the thermistor TH. For example, according to embodiments of the present disclosure, the assembling slit piece 110 may provide the assembling slit S into which the measurement line portion 230 on which the thermistor TH is mounted is inserted, and the insertion of the measurement line portion 230 into the assembling slit S may be performed according to a guide of the assembling guide piece 120 at a side opposite to the assembling slit piece 110. For example, according to embodiments of the present disclosure, the measurement line portion 230 on which the thermistor TH is mounted may be inserted into the assembling slit S provided by the assembling slit piece 110 at a position facing the assembling guide piece 120 along the first direction Z1 so as to be assembled on the cell holder H. As the measurement line portion 230 is assembled, the thermistor TH mounted on the measurement line portion 230 may be fixed into the correct position adjacent to the battery cells 10.

According to embodiments of the present disclosure, the assembling slit piece 110 at one side of the thermistor TH and the assembling guide piece 120 at the other side of the thermistor TH may solidly fix the position of the thermistor TH at opposite sides of the thermistor TH and may also realize the assembling of the thermistor TH or the measurement line portion 230 on which the thermistor TH is mounted. For example, the assembling slit piece 110 and the assembling guide piece 120 at opposite sides of the thermistor TH may perform both the function of assembling the thermistor TH or the measurement line portion 230 on which the thermistor TH is mounted and the function of fixing the position of the assembled measurement line portion 230 or thermistor TH mounted on the measurement line portion 230. In one or more embodiments, the measurement line portion 230 on which the thermistor TH is mounted may be inserted into the assembling slit S of the assembling slit piece 110 under the guide of the assembling slit piece 110 and the assembling guide piece 120 at both sides of the measurement line portion 230. In one or more embodiments, the measurement line portion 230 may be inserted into the assembling slit S of the assembling slit piece 110 while facing the assembling guide piece 120. For example, the measurement line portion 230 may be inserted into the assembling slit S by being aligned in the first direction Z1 while facing the assembling guide piece 120 extending in the second direction Z2, and thus the measurement line portion 230 may have its posture biased or controlled to be downwardly oriented toward the battery cells 10 in the third direction Z3 crossing the first and second directions Z1 and Z2.

According to embodiments of the present disclosure, the assembling slit S may bend the measurement line portion 230 on which the thermistor TH is mounted or located toward the battery cells 10 in the third direction Z3 crossing the first and second directions Z1 and Z2, along a diagonal edge E (see FIG. 6) of the assembling slit piece 110. For example, the measurement line portion 230 may be downwardly bent along the diagonal edge E of the assembling slit S and may form contact with the diagonal edge E of the assembling slit S according to an elastic restoring force, and thus may be downwardly bent in the third direction Z3 crossing the first and second directions Z1 and Z2 along the diagonal edge E of the assembling slit S.

In one or more embodiments of the present disclosure, the assembling slit S may bend the measurement line portion 230 on which the thermistor TH is mounted or located toward the battery cells 10 in the third direction Z3 crossing the first and second directions Z1 and Z2 along a diagonal edge E (see FIG. 6) of the assembling slit piece 110. For example, the measurement line portion 230 may be downwardly bent along the diagonal edge E of the assembling slit S and may contact the diagonal edge E of the assembling slit S according to an elastic restoring force, and thus may be downwardly bent in the third direction Z3 crossing the first and second directions Z1 and Z2 along the diagonal edge E of the assembling slit piece 110. For example, according to embodiments of the present disclosure, the diagonal edge E of the assembling slit piece 110 may face the support plate H1 on which the bus bar B and the second connection line portion 220 are supported, and the diagonal edge E of the assembling slit piece 110 may be downwardly inclined in the third direction Z3 crossing the first and second directions Z1 and Z2. For example, the diagonal edge E of the assembling slit piece 110 may have a gradually increasing distance from the support plate H1 downward in a height direction of the assembling slit piece 110, and the measurement line portion 230 guided along the diagonal edge E of the assembling slit piece 110 may have its assembling posture biased or controlled to be downwardly inclined.

According to embodiments of the present disclosure, the assembling slit piece 110 and the assembling guide piece 120 may be formed at both sides (e.g., opposite sides or ends) of the thermistor TH or the measurement line portion 230 on which the thermistor TH is mounted, and the thermistor TH or the measurement line portion 230 on which the thermistor TH is mounted may have its position fixed by being inserted between the assembling slit piece 110 and the assembling guide piece 120.

According to embodiments of the present disclosure, the assembling slit piece 110 may form the assembling slit S between the assembling slit piece 110 and the support plate H1 of the cell holder H on which the bus bar B or the second connection line portion 220 extending in the first direction Z1 in parallel with the bus bar B is mounted. For example, according to embodiments of the present disclosure, the assembling slit S may be formed by the assembling slit piece 110, and the assembling slit S may be formed by the assembling slit piece 110 for the assembling and the posture controlling (or biasing) of the measurement line portion 230 extending from the second connection line portion 220. For example, the assembling slit S may be formed between the support plate H1 of the cell holder H supporting the second connection line portion 220 and the assembling slit piece 110 configured to bias or control the assembling position and the assembling posture of the measurement line portion 230 extending from the second connection line portion 220 on the support plate H1.

According to embodiments of the present disclosure, the cell holder H may include the support plate H1 for supporting the bus bar B (for example, the main body portion B1 of the bus bar B) and the second connection line portion 220 on the cell holder H, and the support plate H1 of the cell holder H may extend in the first direction Z1 in which the battery cells 10 are arranged and may support the bus bar (the main body portion B1 of the bus bar B) and the second connection line portion 220 extending in the first direction Z1. According to embodiments of the present disclosure, the cell holder H may include the assembling piece 100 extending from the support plate H1 extending in the first direction Z1, and the assembling slit piece 110 in the assembling piece 100 may form the assembling slit S between the support plate H1 and the assembling slit piece 110. Also, the measurement line portion 230 extending from the second connection line portion 220 extending along the support plate H1 extending in the first direction Z1 may have its assembling position and its assembling posture biased or controlled through the assembling piece 100 extending from the support plate H1. For example, according to embodiments of the present disclosure, the measurement line portion 230 extending from the second connection line portion 220 or the thermistor TH mounted on the measurement line portion 230 may have its assembling position and its assembling posture biased or controlled through the assembling piece 100 extending from the support plate H1 of the cell holder H supporting the second connection line portion 220.

According to embodiments of the present disclosure, the position of the thermistor TH or the measurement line portion 230 on which the thermistor TH is mounted may be controlled (or biased) not to deviate (or substantially not to deviate) from the battery cells 10 through the assembling piece 100 of the cell holder H. While the assembling position of the thermistor TH or the measurement line portion 230 on which the thermistor TH is mounted is controlled, the assembling posture of the thermistor TH or the measurement line portion 230 may be controlled (or biased) to be downwardly oriented toward the battery cells 10 in the third direction Z3 crossing the first and second directions Z1 and Z2. According to embodiments of the present disclosure, the assembling slit piece 110 and the assembling guide piece 120 of the assembling piece 100 may be at opposite sides of the thermistor TH or at opposite sides of the measurement line portion 230 on which the thermistor TH is mounted, and for example, may be spaced apart from each other in the first direction Z1 corresponding to a lengthwise direction of the second connection line portion 220 from which the measurement line portion 230 extends. For example, the second connection line portion 220 may extend in the first direction Z1, and the assembling slit piece 110 and the assembling guide piece 120 for controlling the position (biasing the position) and controlling the posture (biasing the posture) of the measurement line portion 230 extending from the second connection line portion 220 or the thermistor TH mounted on the measurement line portion 230 may be spaced apart from each other in the first direction Z1. For example, the assembling slit piece 110 and the assembling guide piece 120 may form an assembling space between each other in the first direction Z1 and may accommodate, in the assembling space, the measurement line portion 230 or the thermistor TH mounted on the measurement line portion 230.

According to embodiments of the present disclosure, the assembling piece 100 configured to control (or bias) the assembling position of the thermistor TH or the measurement line portion 230 on which the thermistor TH is mounted not to deviate (or substantially not to deviate) from the battery cells 10 on a plane formed by the first and second directions Z1 and Z2 and configured to control (or bias) the assembling posture of the same to be oriented downwardly toward the battery cells 10 in the third direction Z3 crossing the first and second directions Z1 and Z2, may surround the thermistor TH or the measurement line portion 230 on which the thermistor TH is mounted. In one or more embodiments, the assembling piece 100 may surround the thermistor TH or the measurement line portion 230 on which the thermistor TH is mounted in an open-loop shape. For example, a first opening g1 configured to accommodate the measurement line portion 230 extending from the second connection line portion 220 and a second opening g2 at the opposite side to the first opening g1 may be provided between the assembling slit piece 110 and the assembling guide piece 120 on the assembling piece 100. As described above, according to embodiments of the present disclosure, between the assembling slit piece 110 and the assembling guide piece 120 of the assembling piece 110, the first opening g1 for accommodating the measurement line portion 230 extending from the second connection line portion 220 and the second opening g2 at the opposite side to the first opening g1 may be provided, and thus the assembling state of the thermistor TH or the measurement line portion 230 on which the thermistor TH is mounted, which is accommodated between the assembling slit piece 110 and the assembling guide piece 120 forming the assembling slit 110, may be visibly and easily identified, thus saving mounting time. Additionally, in a molding process of the cell holder H, in which fused resins for forming the cell holder H are injected into a mold and cooling and demolding are performed to form the cell holder H, twisting deformation of the assembling slit piece 110 and the assembling guide piece 120 of the assembling piece 100 due to cold contraction of the cell holder H may be suppressed or mitigated. For example, through the second opening g2, transmission of a retraction force applied from the assembling slit piece 110 and the assembling guide piece 120 physically separated from each other toward each other due to cold contraction may be blocked or at least mitigated. Also, twisting deformation occurring in the assembling slit piece 110 and the assembling guide piece 120 due to contraction stress which may be applied to each of the assembling slit piece 110 and the assembling guide piece 120 due to cold contraction or volume contraction caused by cooling may be prevented or at least mitigated due to the second opening g2.

As described above, the battery pack according to embodiments of the present disclosure may include the plurality of battery packs 10, the thermistor TH configured to measure temperature information of at least one battery cell 10 from among the plurality of battery cells 10, the cell holder H configured to control the assembling position of the plurality of battery cells 10 and control or bias the assembling position and the assembling posture of the thermistor TH, and the measurement line portion 230 connected to the thermistor TH to receive the measured temperature information from the thermistor TH. The cell holder H includes the assembling piece 100 for controlling or biasing both of the assembling position and the assembling posture of the thermistor TH in a position toward the battery cells 10 without deviating (or substantially without deviating) from the battery cells 10.

According to embodiments of the present disclosure, the assembling piece 100 may control or bias the assembling position and the assembling posture of the thermistor TH or the measurement line portion 230 on which the thermistor TH is mounted. In one or more embodiments, the assembling piece 100 may force the posture of the measurement line portion 230 to be oriented downwardly toward the battery cells 10 on the upper end portion 11 of the battery cells 10 (i.e., the assembling position of the measurement line portion 230 on which the thermistor TH is mounted is oriented downward toward the battery cells 10).

For example, according to embodiments of the present disclosure, the assembling piece 100 may control or bias the assembling position and the assembling posture of the measurement line portion 230 on which the thermistor TH is mounted such that the measurement line portion 230 on which the thermistor TH is mounted may be in contact with the upper end portion 11 of the battery cells 10.

According to embodiments of the present disclosure, the assembling piece 100 may include the assembling slit piece 110 and the assembling guide piece 120 at opposite sides of the measurement line portion 230 on which the thermistor TH is mounted. For example, the assembling slit piece 110 and the assembling guide piece 120 may be spaced apart from each other in the first direction Z1 corresponding to the lengthwise direction of the second connection line portion 220 from which the measurement line portion 230 extends. The assembling position and the assembling posture of the measurement line portion 230 are controlled or biased by the assembling slit S formed by the assembling slit piece 110 and the assembling guide piece 120.

According to embodiments of the present disclosure, the assembling slit piece 110 may include a downwardly inclined edge E (see FIG. 6) to force the measurement line portion 230 on which the thermistor TH is mounted to be bent downwardly. For example, the measurement line portion 230 on which the thermistor TH is mounted may be bent by the assembling slit piece 110, and the assembling slit piece 110 may form the assembling slit S to permit the passing of the measurement line portion 230 between the assembling slit piece 110 and the support plate H1 of the cell holder H for supporting the second connection line portion 220 connected to the BMS as the circuit portion C of the battery pack. In one or more embodiments, the measurement line portion 230 on which the thermistor TH is mounted may be bent and accommodated in the assembling slit S, and the assembling slit S may be between the support plate H1 of the cell holder H for supporting the second connection line portion 220 connected to the BMS as the circuit portion C of the battery pack and the downwardly inclined edge E of the assembling slit piece 110 in the assembling piece 110 for controlling the assembling position and the assembling posture of the measurement line portion 230.

According to embodiments of the present disclosure, the measurement line portion 230 on which the thermistor TH is mounted may be inserted and assembled into the assembling piece 100 and may be bent, and the measurement line portion 230 may be bent downwardly with respect to the second connection line portion 220 from which the measurement line portion 230 extends and which is connected to the BMS as the circuit portion C of the battery pack. For example, according to embodiments of the present disclosure, through an upwardly bent portion (e.g., a hump or bump) (see FIG. 3) with respect to the second connection line portion 220, the measurement line portion 230 on which the thermistor TH is mounted may provide a marginal length remaining after forming contact with the upper end portion 11 of the battery cells 10. For example, according to embodiments of the present disclosure, the assembling piece 100 for controlling or biasing the assembling position and the assembling posture of the thermistor TH or the measurement line portion 230 on which the thermistor TH is mounted may control or bias the assembling position and the assembling posture of the thermistor TH or the assembling line portion 230 on which the thermistor TH is mounted such that the measurement line portion 230 on which the thermistor TH is mounted is in contact with the upper end portion 11 of the battery cells 10 while not deviating (or substantially not deviating) from the battery cells 10. The measurement line portion 230 on which the thermistor TH is mounted may be bent by being controlled to be the assembling posture oriented downward toward the upper end portion 11 of the battery cells 10, and the bent portion of the measurement line portion 230, for example, the upwardly bent portion (see FIG. 3) with respect to the second connection line portion 220 from which the measurement line portion 230 extends may provide a sufficient marginal length for the measurement line portion 230 to be in contact with the upper end portion 11 of the battery cells 10.

According to embodiments of the present disclosure, the plurality of battery cells 10 may be arranged in a plurality of columns arranged in a second direction Z2 crossing the first direction in which each of the plurality of columns includes a plurality of battery cells 10 in the first direction Z1.

The assembling piece 100 may surround the thermistor TH or the measurement line portion 230 on which the thermistor TH is mounted in an open-loop shape that is open in a plane formed by the first and second directions Z1 and Z2. For example, according to embodiments of the present disclosure, the assembling piece 100 may surround the thermistor TH or the measurement line portion 230 on which the thermistor TH is mounted in an open-loop shape that is open through the first and second openings g1 and g2 at opposite sides of the thermistor TH or at opposite sides of the measurement line portion 230 on which the thermistor TH is mounted.

For example, according to embodiments of the present disclosure, the first opening g1 may be configured to allow the measurement line portion 230 on which the thermistor TH is mounted to extend from the second connection line portion 220 connected to the BMS as the circuit portion C (see FIG. 1) of the battery pack, and the second opening g2 may allow a distance between the assembling slit piece 110 and the assembling guide piece 120 of the assembling piece 100 at opposite sides of the first opening g1.

According to embodiments of the present disclosure, the assembling slit piece 110 and the assembling guide piece 120 may be spaced apart from each other through the first and second openings g1 and g2. For example, according to embodiments of the present disclosure, the assembling slit piece 110 and the assembling guide piece 120 of the assembling piece 100 may be spaced apart from each other in the first direction Z1 corresponding to the lengthwise direction of the second connection line portion 220 from which the measurement line portion 230, the assembling position and the assembling posture of which are controlled by the assembling piece 100, extends. The assembling slit piece 110 and the assembling guide piece 120 may be spaced apart from each other through the first and second openings g1 and g2 at opposite sides to each other in the second direction Z2 crossing the first direction Z1. As described above, the assembling slit piece 110 and the assembling guide piece 120 of the assembling piece 100 may surround the thermistor TH or the measurement line portion 230 on which the thermistor TH is mounted in the open-loop shape that is open through the first and second openings g1 and g2 at opposite sides to each other in the second direction Z1 on the plane formed by the first and second directions Z1 and Z2. According to embodiments of the present disclosure, the first direction Z1 may denote a direction in which the plurality of battery cells 10 are arranged in columns, and the second direction Z2 may denote a direction in which the columns including the plurality of battery cells 10 are arranged.

According to embodiments of the present disclosure, the assembling slit piece 110 and the assembling guide piece 120 may include first segments 110a and 120a, respectively, (see FIG. 5) extending in the second direction Z2 crossing the first direction Z1 corresponding to the lengthwise direction of the second connection line portion 220 from which the thermistor TH or the measurement line portion 230 on which the thermistor TH is mounted extends. The assembling guide piece 120 may include only the first segment 120a extending in the second direction Z2, and the assembling slit piece 110 may further include a second segment 110b (see FIG. 5) extending in the first direction, together with the first segment 110a extending in the second direction Z2, and may further include a third segment 110c (see FIG. 5) extending in a diagonal direction with respect to the first and second directions Z1 and Z2 between the first and second segments 110a and 110b. As described above, according to embodiments of the present disclosure, the assembling guide piece 120 in the assembling slit piece 110 may include only the first segment 120a extending in the second direction Z2, but the assembling slit piece 110 may include the second segment 110b extending in the first direction Z1, together with the first segment 110a extending in the second direction Z2, and may also include the third segment 110c extending in the diagonal direction with respect to the first and second directions Z1 and Z2. It may be understood that each of the assembling guide piece 120 and the assembling slit piece 110 may surround a different side of the thermistor TH.

According to embodiments of the present disclosure, the assembling slit piece 110 and the assembling guide piece 120 may be at both sides (opposite sides or ends) of the thermistor TH or the measurement line portion 230 on which the thermistor TH is mounted, and may engage in assembling and fixing of position of the thermistor TH or the measurement line portion 230 on which the thermistor TH is mounted.

According to embodiments of the present disclosure, the assembling slit S may be between the support plate H1 of the cell holder H on which the bus bar B or the second connection line portion 220 extending in the first direction Z1 in parallel with the bus bar B is mounted, and the assembling slit piece 110. For example, the assembling slit S according to embodiments of the present disclosure may be formed by the assembling slit piece 110, and the assembling slit S may be formed by the assembling slit piece 110 for assembling and controlling the posture of the measurement line portion 230 extending from the second connection line portion 220. For example, the assembling slit S may be between the support plate H1 of the cell holder H supporting the second connection line portion 220 and the assembling slit piece 110 extending from the second connection line portion 220. For example, according to embodiments of the present disclosure, the cell holder H may include the support plate H1 for supporting the bus bar B and the second connection line portion 220 arranged on the cell holder H, and the support plate H1 of the cell holder H may extend in the first direction Z1 in which the battery cells 10 are arranged and may support the bus bar B and second connection line portion 220 extending in the first direction Z1. According to embodiments of the present disclosure, the cell holder H may include the assembling piece 100 extending from the support plate H1 extending in the first direction Z1, and the assembling slit piece 110 in the assembling piece 100 may form the assembling slit S between the support plate H1 and the assembling slit piece 110. Also, the measurement line portion 230 extending from the second connection line portion 220 extending on the support plate H1 extending in the first direction Z1 may be assembled and have its posture controlled through the assembling piece 100 extending from the support plate H1. According to embodiments of the present disclosure, the measurement line portion 230 extending from the second connection line portion 220 or the thermistor TH mounted on the measurement line portion 230 may be assembled and have its posture controlled through the assembling piece 100 extending from the support plate H1 of the cell holder H supporting the second connection line portion 220.

According to embodiments of the present disclosure, the position of the thermistor TH or the measurement line portion 230 on which the thermistor TH is mounted may be controlled (biased) not to deviate (or substantially not to deviate) from the battery cells 10 through the assembling piece 100 of the cell holder H, and the posture of the thermistor TH or the measurement line portion 230 may be controlled (biased) to be oriented downward toward the battery cells 10 in the third direction Z3 crossing the first and second directions Z1 and Z2 through the assembling piece 100 of the cell holder H. According to embodiments of the present disclosure, the assembling slit piece 110 and the assembling guide piece 120 of the assembling piece 100 may be at opposite sides of the thermistor TH or at opposite sides of the measurement line portion 230 on which the thermistor TH is mounted, and, for example, may be spaced apart from each other in the first direction Z1 corresponding to a lengthwise direction of the second connection line portion 210 from which the measurement line portion 230 extends. For example, the second connection line portion 220 may extend in the first direction Z1, and the assembling slit piece 110 and the assembling guide piece 120 configured to control the position and the posture (bias the position and the posture) of the measurement line portion 230 extending from the second connection line portion 220 or the thermistor TH mounted on the measurement line portion 230 may be spaced apart from each other in the first direction Z1. For example, the assembling slit piece 110 and the assembling guide piece 120 may form an assembling space between each other in the first direction Z1, and the measurement line portion 230 or the thermistor TH mounted on the measurement line portion 230 may be accommodated in the assembling space.

According to embodiments of the present disclosure, the assembling piece 100 configured to control or bias the position of the thermistor TH or the measurement line portion 230 on which the thermistor TH is mounted not to deviate (or substantially not to deviate) from the battery cells 10 on a plane formed by the first and second directions Z1 and Z2 and configured to control or bias the posture of the thermistor TH or the measurement line portion 230 to be oriented downward toward the battery cells 10 in the third direction Z3 crossing the first and second directions Z1 and Z2, may surround the thermistor TH or the measurement line portion 230 on which the thermistor TH is mounted in an open-loop shape. For example, the first opening g1 configured to accommodate the measurement line portion 230 extending from the second connection line portion 220 and the second opening g2 opposite to the first opening g1 may be formed between the assembling slit piece 110 and the assembling guide piece 120 of the assembling piece 100. As described above, according to embodiments of the present disclosure, between the assembling slit piece 110 and the assembling guide piece 120 of the assembling piece 110, the first opening g1 for accommodating the measurement line portion 230 extending from the second connection line portion 220 may be formed and the second opening g2 at the opposite side to the first opening g1 may be formed. In one or more embodiments, the second opening g2 may be opposite side to the first opening g1 in the second direction Z2 crossing the first direction Z1 in which the assembling slit piece 110 and the assembling guide piece 120 are spaced apart from each other. Thus, the assembling state of the thermistor TH or the measurement line portion 230 on which the thermistor TH is mounted, which is accommodated between the assembling slit piece 110 and the assembling guide piece 120 of the assembling slit 110, may be visibly and easily identified. Additionally, in a molding process of the cell holder H, in which fused resins for forming the cell holder H are injected into a mold and cooling and demolding are performed to form the cell holder H, twisting deformation of the assembling slit piece 110 and the assembling guide piece 120 of the assembling piece 100 due to cold contraction of the cell holder H may be suppressed or mitigated. For example, through the first and second openings g1 and g2 in the second direction Z2, the transmission of a retraction force applied from the assembling slit piece 110 and the assembling guide piece 120 toward each other due to cold contraction may be blocked or at least mitigated. Also, twisting deformation occurring in the assembling slit piece 110 and the assembling guide piece 120 due to contraction stress which may be applied to each of the assembling slit piece 110 and the assembling guide piece 120 due to cold contraction or volume contraction caused by cooling may be prevented or at least mitigated due to the first and second openings g1 and g2.

According to embodiments of the present disclosure, the assembling slit piece 110 and the assembling guide piece 120 may be spaced apart from each other in the first direction Z1 along the second connection line portion 220 extending in the first direction Z1. Also, the assembling slit piece 110 and the assembling guide piece 120 may include the first segments 110a and 120a, respectively, extending in parallel (or substantially in parallel) with each other in the second direction Z2 and may control the position in the first direction Z1 of the thermistor TH or the measurement line portion 230 on which the thermistor TH is mounted between the first and second segments 110a and 120. Also, the assembling slit piece 110 may further include the second segment 110b extending in the first direction Z1, together with the first segment 110a extending in the second direction Z2 and may control the position in the second direction Z2 of the thermistor TH or the measurement line portion 230 on which the thermistor TH is mounted. The assembling slit piece 110 may further include the third segment 110c following a diagonal direction with respect to the first and second directions Z1 and Z2, between the first and second segments 110a and 110b following the second and first directions Z2 and Z1, respectively. The third segment 110c may interrupt the mobility of the fused resins in the process of forming the cell holder H along an edge which may be formed by direct contact of the first and second segments 110a and 110b following the first and second directions Z1 and Z2 or may reduce twisting deformation in the first and second segments 110a and 110b following the first and second directions Z1 and Z2 due to thermal contraction or volumetric shrinkage as the fused resins are cooled at the edge which may be formed by direct contact of the first and second segments 110a and 110b following the first and second directions Z1 and Z2. According to embodiments of the present disclosure, the assembling guide piece 120 in the assembling piece 100 may extend in the second direction Z2 crossing the first direction Z1 in which the battery cells 10 are arranged, and the assembling slit piece 110 in the assembling piece 100 may include the first and second segments 110a and 110b respectively following the second direction Z2 crossing the first direction Z1 and the first direction Z1 in which the battery cells 10 are arranged, and the assembling slit piece 110 may further include the third segment 110c extending in the diagonal direction with respect to the first and second directions Z1 and Z2. For example, the assembling guide piece 120 may surround a side of the thermistor TH or the measurement line portion 230 on which the thermistor TH is mounted, and the assembling slit piece 110 may surround two or more different sides of the thermistor TH or the measurement line portion 230 on which the thermistor TH is mounted.

According to embodiments of the present disclosure, the thermistor TH or the measurement line portion 230 on which the thermistor TH is mounted may be in contact with the upper end portion 11 of the battery cells 10 while being inserted and assembled into the assembling piece 100. For example, the thermistor TH or the measurement line portion 230 on which the thermistor TH is mounted may have its assembling position controlled or biased, through the assembling slit piece 110 and the assembling guide piece 120 at opposite sides of the assembling piece 100 in the first direction Z1, not to deviate (or substantially not to deviate) from the battery cells 10, and may be in contact with the upper end portion 11 of the battery cells 10 while not deviating (or substantially not deviating) from the battery cells 10. For example, according to embodiments of the present disclosure, the measurement line portion 230 on which the thermistor TH is mounted may be pressurized above the upper end portion 11 of the battery cells 10, and a portion of the measurement line portion 230 pressurized above the upper end portion 11 of the battery cells 10 may have a curved shape or hump having a marginal length (see FIG. 3). For example, according to embodiments of the present disclosure, the measurement line portion 230 on which the thermistor TH is mounted may be in direct contact with the battery cells 10, and the thermistor TH may not be in direct contact with the battery cells 10, in order to prevent (or at least mitigate) current flowing in the thermistor TH. Also, for the measurement line portion 230 to be in contact with the upper end portion 11 of the battery cells 10 with a sufficient marginal length, the marginal length provided in the measurement line portion 230 may form a curved shape (e.g., a hump or bump) and may have a stretchable or deformable length (see FIG. 3).

According to embodiments of the present disclosure, the thermistor TH and the battery cells 10 may not be in direct contact with each other. However, a thermal interface material (TIM) may be arranged between the thermistor TH and the battery cells 10, and thus thermal contact may be formed between the thermistor TH and the battery cells 10. For example, the TIM may be applied onto the thermistor TH or the measurement line portion 230 on which the thermistor TH is mounted and may form a heat transfer path between the battery cells 10 and the thermistor TH. According to various embodiments, the TIM may be arranged between the battery cells 10 and the measurement line portion 230 on the upper end portion 11 of the battery cells 10 and may be configured to transmit the temperature information of the battery cells 10 to the measurement line portion 230. The temperature information of the battery cells 10 may be transmitted toward the thermistor TH mounted on the measurement line portion 230 through the measurement line portion 230.

According to embodiments of the present disclosure, the assembling piece 100 of the cell holder H may be configured to control (bias) the position and the posture of the thermistor TH for measuring the temperature information of the battery cells 10 or the measurement line portion 230 on which the thermistor TH is mounted. According to embodiments of the present disclosure, because the posture of the measurement line portion 230 may be forcibly controlled or biased to be oriented downward toward the battery cells 10 in the third direction Z3 crossing the first and second directions Z1 and Z2 through the assembling slit piece 110 included in the assembling piece 100 and forming the assembling slit S, a previous bending process or operation of the thermistor TH or the measurement line portion 230 on which the thermistor TH is mounted may not be required. For example, according to embodiments of the present disclosure, while the measurement line portion 230 may be assembled along the diagonal edge E of the assembling slit piece 110 in the assembling slit 100 by being inserted into the assembling piece 100, the posture of the measurement line portion 230 may be controlled or biased toward the diagonal direction oriented toward the battery cells 10 in the third direction Z3 crossing the first and second directions Z1 and Z2.

FIG. 7 is a perspective view of a battery pack according to a comparative embodiment, which is illustrated to describe a structure of an assembling piece 100' on which a measurement line portion 230' is mounted and on which a thermistor TH' is mounted.

As illustrated in FIG. 7, according to the comparative embodiment, the assembling piece 100' may be formed on a first position P1' of a cell holder H' to provide an assembling space for controlling the position of the thermistor TH'. Even though the assembling piece 100' according to the comparative embodiment may control the position of the thermistor TH', the assembling piece 100' may not forcibly control or bias a posture of the measurement line portion 230' on which the thermistor TH' is mounted, as the posture of the thermistor TH', to be downwardly oriented toward battery cells 10' in the third direction Z3 crossing the first and second directions Z1 and Z2. Thus, according to the comparative embodiment, a previous bending process may have to be additionally performed before assembling of the thermistor TH' or the measurement line portion 230', and due to a time for performing this additional previous bending process, the overall process time may be delayed, and additional equipment for the bending process may be required. Also, according to the comparative embodiment, even if the previous bending process is performed before the assembling of the thermistor TH' or the measurement line portion 230' on which the thermistor TH' is mounted, a structure for controlling or biasing the posture of the thermistor TH' or the measurement line portion 230' on which the thermistor TH' is mounted is not provided, and thus a delicate bending structure may not be formed due to a spring-back (i.e., a resilient restorative force) of the measurement line portion 230' after the previous bending process. For example, the posture of the measurement line portion 230' having a delicate bending structure which may be forced to be in contact with an upper end portion 11' of the battery cells 10' may be difficult to be formed. For example, according to the comparative embodiment, to maintain a bent shape of the measurement line portion 230' formed through the previous bending process, complex bending operation may be required in overall with respect to the measurement line portion 230' or a second connection line portion 220' to which the measurement line portion 230' is connected, in addition to the bending of other additional positions.

According to embodiments of the present disclosure, through the assembling piece 100 of the cell holder H, as a component configured to control or bias the position and the posture of the thermistor TH, the assembling piece 100 of the cell holder H being configured to control or bias the position of the thermistor TH or the measurement line portion 230 on which the thermistor TH is mounted not to deviate (or substantially not to deviate) from the position of the battery cells 10 and being configured to control or bias the posture of the thermistor TH or the measurement line portion 230 on which the thermistor TH is mounted to be oriented toward the battery cells 10, the assembling position and the posture of the thermistor TH may be precisely controlled. For example, unlike the comparative embodiment, according to which the assembling position of the thermistor TH' or the measurement line portion 230' on which the thermistor TH' is mounted may be controlled at one side, both the assembling position and the assembling posture of the thermistor TH or the measurement line portion 230 on which the thermistor TH is mounted may be controlled or biased at both positions of the thermistor TH or the measurement line portion 230 on which the thermistor TH is mounted through the assembling piece 100 of the cell holder H. Thus, the temperature measurement from the battery cells 10 may be realized with increased reliability compared to the comparative embodiment.

According to the present disclosure, the battery pack may be provided, in which the assembling piece configured to control the assembling position and the assembling posture of the thermistor for measuring the temperature of the battery cells or the measurement line portion on which the thermistor is mounted may be formed on the cell holder for controlling the assembling position of the battery cells so that the relative positions of the battery cells and the thermistor for measuring the temperature of the battery cells may be precisely controlled, and through the assembling piece for controlling the assembling position and the assembling posture of the thermistor or the measurement line portion on which the thermistor is mounted, to be oriented downward toward the upper end portion of the battery cells, at a position on the upper end portion of the battery cells not to deviate (or substantially not to deviate) from the battery cells, the reliability of the temperature measurement with respect to the battery cells may be improved compared to related art battery packs.

The present disclosure also relates to various embodiments of a vehicle (e.g., an electric vehicle or hybrid vehicle) including at least one battery pack as a power source. The battery pack utilized in the vehicle may be the same as (or similar to) any embodiment of the battery pack described herein.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by one of ordinary skill in the art that various changes in form and details may be made therein without departing from scope of the present disclosure as defined by the following claims.

## Claims

1. A battery pack comprising:
a plurality of battery cells (10, 10');
a thermistor (TH) configured to measure temperature information of at least one of the plurality of battery cells (10, 10');
a cell holder (H) configured to control an assembling position of the plurality of battery cells (10, 10'), the cell holder (H) comprising an assembling piece (100, 100') configured to cause an assembling position of the thermistor (TH) to substantially not deviate from the plurality of battery cells (10, 10') and an assembling posture of the thermistor (TH) to be oriented toward the plurality of battery cells (10, 10'); and
a circuit portion (C) connected to the thermistor, the circuit portion (C) being configured to receive the measured temperature information from the thermistor (TH).

2. The battery pack as claimed in claim 1, wherein the assembling piece (100, 100') is further configured to bias an assembling position and an assembling posture of a measurement line portion (230, 230') on which the thermistor (TH) is mounted.

3. The battery pack as claimed in claim 2, wherein the assembling piece (100, 100') is configured to force the assembling posture of each of the thermistor (TH) and the measurement line portion (230, 230') to be oriented downward toward the plurality of battery cells (10, 10'), and wherein the assembling position of the measurement line portion (230, 230') on which the thermistor (TH) is mounted is on an upper end portion (11, 11') of the plurality of battery cells (10, 10').

4. The battery pack as claimed in claim 3, wherein the assembling piece (100, 100') is configured to control the assembling position and the assembling posture of the measurement line portion (230, 230') on which the thermistor (TH) is mounted such that the measurement line portion (230, 230') on which the thermistor (TH) is mounted contacts the upper end portion (11, 11') of the plurality of battery cells (10, 10').

5. The battery pack as claimed in claims 2 to 4, wherein the assembling piece (100, 100') comprises an assembling slit piece (110) and an assembling guide piece (120) at opposite positions on both sides of the measurement line portion (230, 230') on which the thermistor (TH) is mounted.

6. The battery pack as claimed in claim 5, wherein the assembling slit piece (110) comprises a downwardly inclined edge configured to force a downward bending of the measurement line portion (230, 230') on which the thermistor (TH) is mounted and/or wherein the assembling slit piece (110) comprises an assembling slit configured to allowing passing of the measurement line portion (230, 230') on which the thermistor (TH) is mounted, the measurement line portion (230, 230') extending from a second connection line portion (220, 220', 220-2) supported on a support plate of the cell holder (H) and connected to the circuit portion and/or wherein the assembling slit piece (110) is between the support plate of the cell holder (H) supporting the second connection line portion (220, 220', 220-2) from which the measurement line portion (230, 230') on which the thermistor (TH) is mounted extends and which is connected to the circuit portion, and the downwardly inclined edge of the assembling slit piece (110) in the assembling piece (100, 100') configured to control the assembling position and the assembling posture of the measurement line portion (230, 230').

7. The battery pack as claimed in claims 2 to 6, wherein the measurement line portion (230, 230') on which the thermistor (TH) is mounted is bent and inserted and assembled into the assembling piece (100, 100'),
wherein the measurement line portion (230, 230') is bent from an upper position to a lower position with respect to a second connection line portion (220, 220', 220-2) from which the measurement line portion (230, 230') is diverged and which is connected to the circuit portion and/or wherein the measurement line portion (230, 230') on which the thermistor (TH) is mounted provides a marginal length remaining after forming contact with an upper end portion (11, 11') of the battery cells (10'), through a portion bent toward the upper position with respect to the second connection line portion (220, 220', 220-2).

8. The battery pack as claimed in claims 2 to 7, wherein the plurality of battery cells (10, 10') are arranged in a plurality of columns each comprising a plurality of battery cells (10, 10') in a first direction, the plurality of columns being arranged in a second direction (Z2) crossing the first direction, and
wherein the assembling piece (100, 100') surrounds the thermistor (TH) or the measurement line portion (230, 230') on which the thermistor (TH) is mounted in an open-loop shape that is open in a plane formed by the first and second directions.

9. The battery pack as claimed in claim 8, wherein the assembling piece (100, 100') surrounds the thermistor (TH) or the measurement line portion (230, 230') on which the thermistor (TH) is mounted, and wherein the open-loop shape is open through first and second openings (g2) at opposite sides of the thermistor (TH) or the measurement line portion (230, 230') on which the thermistor (TH) is mounted and/or wherein the first opening (g1) is configured to allow the measurement line portion (230, 230') on which the thermistor (TH) is mounted to be diverged from a second connection line portion (220, 220', 220-2) connected to the circuit portion, and
wherein the second opening (g2) at an opposite side to the first opening (g1) is configured to allow a distance between an assembling slit piece (110) and an assembling guide piece (120) of the assembling piece (100, 100').

10. The battery pack as claimed in claim 9, wherein the assembling slit piece (110) and the assembling guide piece (120) are apart from each other through the first and second openings (g1, g2).

11. The battery pack as claimed in claim 9 or 10, wherein the assembling slit piece (110) and the assembling guide piece (120) surround different sides of the thermistor (TH) or the measurement line portion (230, 230') on which the thermistor (TH) is mounted.

12. The battery pack as claimed in claims 9 to 11, wherein the thermistor (TH) is mounted on the measurement line portion (230, 230') diverged from the second connection line portion (220, 220', 220-2) in a direction crossing the first direction, the second connection line portion (220, 220', 220-2) being connected to the circuit portion (C) and extending in the first direction (Z1) in which the plurality of the battery cells (10, 10') are arranged, and
wherein the assembling slit piece (110) and the assembling guide piece (120) are apart from each other in the first direction and/or wherein the assembling slit piece (110) and the assembling guide piece (120) comprise a first segment (110a, 120a) extending in the second direction (Z2) crossing the first direction, and
wherein the assembling slit piece (110) further comprises a second segment (110b) extending in the first direction (Z1) and a third segment (110c) between the first and second segments (110a, 110b, 120), the third segment (110c) extending in a diagonal direction relative to the first and second directions.

13. The battery pack as claimed in claims 1 to 12, wherein the plurality of battery cells (10, 10') are arranged in a plurality of columns each comprising a plurality of the plurality of battery cells (10, 10') in a first direction, the plurality of columns being arranged in a second direction (Z2) crossing the first direction.

14. The battery pack as claimed in claim 13, wherein the assembling piece (100, 100') surrounds the thermistor (TH) or a measurement line portion (230, 230') on which the thermistor (TH) is mounted in an open-loop shape that is open through first and second openings (g2) at opposite sides to each other in the second direction (Z2) in a plane formed by the first and second directions and/or wherein an assembling slit piece (110) and an assembling guide piece (120) of the assembling piece (100, 100') are apart from each other in the first direction (Z1) and are apart from each other through the first and second openings (g1, g2) at the opposite sides in the second direction (Z2) crossing the first direction.

15. An electric vehicle comprising the battery pack of claims 1 to 14 as a power source.
